# EUROPÄISCHE PATENTSCHRIFT

(11) **EP 3 472 603 B1**
(45) Veröffentlichungstag und Bekanntmachung des Hinweises auf die Patenterteilung: **30.09.2020**
(21) Anmeldenummer: 17732372.2
(22) Anmeldetag: 19.06.2017
(51) Int. Cl.: G01N 27/04, H01L 35/00

(54) **THERMOELEKTRISCHE BESTIMMUNG DES EFFEKTIVEN ABSTANDES ELEKTRISCHER POTENTIALSONDEN**
THERMOELECTRIC DETERMINATION OF THE EFFECTIVE DISTANCE OF ELECTRICAL POTENTIAL SONDES
DÉTERMINATION THERMOÉLECTRIQUE DE LA DISTANCE EFFECTIVE DES SONDES DE POTENTIEL

(30) Priorität: 21.06.2016 DE 102016211062; 01.08.2016 DE 102016214138
(43) Veröffentlichungstag der Anmeldung: 24.04.2019
(73) Patentinhaber: Deutsches Zentrum für Luft- und Raumfahrt e.V., 51147 Köln (DE)
(72) Erfinder: MÜLLER, Eckhard, 53604 Bad Honnef (DE); DE BOOR, Johannes, 51147 Köln (DE); KOLB, Hendrik, 56307 Dürrholz (DE)
(74) Vertreter: dompatent von Kreisler Selting Werner - Partnerschaft von Patent- und Rechtsanwälten mbB
(86) Internationale Anmeldenummer: PCT/EP2017/064910
(87) Internationale Veröffentlichungsnummer: WO 2017/220480

(56) Entgegenhaltungen:
- JP-A- 2004 022 912
- US-A1- 2012 213 250
- KOLB H ET AL: "Simultaneous measurement of all thermoelectric properties of bulk materials in the temperature range 300-600 K", REVIEW OF SCIENTIFIC INSTRUMENTS, AIP, MELVILLE, NY, US, Bd. 86, Nr. 7, 13. Juli 2015 (2015-07-13), XP012198925, ISSN: 0034-6748, DOI: 10.1063/1.4926404 [gefunden am 1901-01-01]
- MIN-SU KANG ET AL: "Correction of the Electrical and Thermal Extrinsic Effects in Thermoelectric Measurements by the Harman Method", SCIENTIFIC REPORTS, Bd. 6, Nr. 1, 20. Mai 2016 (2016-05-20), XP055396447, DOI: 10.1038/srep26507
- Hendrik-Constantin Kolb: "Simultanes Messverfahren zur vollständigen Charakterisierung thermoelektrischer Materialien", Dissertation zur Erlangung des akademischen Grades eines Doktors der Naturwissenschaften der Justus-Liebig-Universität Gießen im Fachbereich der Naturwissenschaften, 5. April 2017 (2017-04-05), Seiten 1-144, XP055401828, Koblenz Gefunden im Internet: URL:http://geb.uni-giessen.de/geb/volltext e/2017/12599/pdf/KolbHendrikConstantin_201 7_02_22.pdf [gefunden am 2017-08-29]

## Beschreibung

Die vorliegende Erfindung betrifft ein Verfahren zur Bestimmung der effektiven Position und damit des effektiven Abstandes elektrischer Potentialsonden auf einer Probe mit thermoelektrischen Eigenschaften, um insbesondere physikalische Eigenschaften der Probe genauer bestimmen zu können, als dies mit bekannten Verfahren möglich ist.

Elektrische Potentialsonden sind weit verbreitet bei der Messung der elektrischen Leitfähigkeit, des elektrischen Kontaktwiderstandes, bei der Rissdetektion und vieles andere mehr. Während elektrische Größen (Strom, Spannung, und so weiter) hochpräzise gemessen werden können, ist die Genauigkeit von Sondenmethoden durch die begrenzte mechanische Positionierungspräzision eingeschränkt. Übliche Messungen der elektrischen Leitfähigkeit an Laborproben elektrischer Funktionsmaterialien sind deshalb in der Praxis nicht genauer als einige Prozent Restunsicherheit.

Aus den elektrischen Messwerten Strom und Spannung kann zum Beispiel der Widerstand zwischen zwei Potentialsonden sehr präzise bestimmt werden, die Genauigkeit der daraus berechneten elektrischen Leitfähigkeit hängt aber von der Genauigkeit ab, mit der geometrische Parameter der Messanordnung, insbesondere der Abstand der Sonden, bekannt sind. Kleine absolute Positionierungsfehler wirken sich bei geringem Gesamtabstand der Sonden (zum Beispiel bei 4-Punkt-Messungen an kleinen Proben oder in Mikrosonden) verhältnismäßig stärker aus.

In Anordnungen, bei denen prinzip- oder verfahrensbedingt der Abstand der Sonden nicht fest eingestellt werden kann, muss der Sondenabstand gemessen werden. Dies kann zum Beispiel mit einem Komparator-Mikroskop erfolgen; oftmals wird der Aufsetzpunkt der Sonden auf der Probe aber durch die Sonden selbst oder ihre Halterungen und Zuleitungen verdeckt, so dass hierdurch keine präzise Bestimmung möglich ist. Bei aufgeschweißten Drahtsonden kann der sichtbare Eintrittspunkt der Sonden deutlich abweichend von der effektiven Kontaktposition sein, insbesondere bei gebogenen Drähten oder Schräglage.

Auch der endliche Sondendurchmesser selbst trägt infolge möglicher Asymmetrie der Kontaktspitze zur Unsicherheit bei. Erhebliche Unwägbarkeiten entstehen auch bei Abweichungen von einer angenommenen Modellgeometrie, zum Beispiel wenn in einer prismatischen Messgeometrie, die mit einem einfachen eindimensionalen Modell des Potentialfeldes beschrieben wird, unerkannt Lunker oder Risse in der Probe enthalten sind oder eine flächige Kontaktierung der Probe in der Messhalterung unerkannte Defekte (zum Beispiel Teilabrisse) aufweist. Physikalisch maßgeblich für eine korrekte lokale Zuordnung des gemessenen Potentialwertes ist die "effektive Sondenposition", das heißt der Ort, an dem im - durch die Sondenmessung ungestörten - Potentialfeld innerhalb der Probe der mit der Sonde gemessene Wert des Potentials vorliegt.

Verbreitet werden 4-Spitzen-Methoden zur Messung der elektrischen Leitfähigkeit auch für thermoelektrische Materialien verwendet, die üblicherweise in Gestalt von kleinen Proben (selten in einer Ausdehnung größer als 10 mm bis 15 mm) vorliegen. Dabei wird die Sondenposition entweder durch mechanische Führungen, zum Beispiel Bohrungen im Probenhalter bestimmt, deren Positionierung durch mechanisches Spiel in der Führung, Neigung oder Asymmetrie der Sondengestalt einer Unsicherheit unterliegt, oder - an aufgeschweißten freistehenden Drahtsonden - mikroskopisch-visuell ermittelt. Letztere Vorgehensweise ist neben der immanenten Unsicherheit der Positionsbestimmung auch im Benutzerhandling wenig komfortabel, weil ein zusätzlicher Messschritt im Laborbetrieb erforderlich ist, bei dem die Probe eingebaut in einem sperrigen und mechanisch empfindlichen Probenhalter transportiert und vermessen werden muss, mit der Gefahr der Beschädigung oder Veränderung der fragilen Sondenkontaktierung.

Die Proben liegen häufig nicht nur in geringer Ausdehnung vor, sondern meist auch nur in geringer Stückzahl beziehungsweise mit gegebenenfalls unbekannter Variation in den individuellen Eigenschaften vermeintlich gleichartig im Labor hergestellter Proben, so dass eine Beschädigung der Probe besonders nachteilig ist.

Es besteht daher Bedarf an einem Verfahren zur Bestimmung der effektiven Position elektrischer Potentialsonden, welches auch für kleine Proben anwendbar ist. Dabei sollten die Probe und ihre Kontaktierung in der Messapparatur möglichst geringer mechanischer Beanspruchung ausgesetzt sein um die Gefahr einer Zerstörung oder Veränderung der Kontaktierung gering zu halten. Die effektiven Positionen der Sonden auf der Probe sind dabei ausschlaggebend für den effektiven Abstand zwischen den Sonden in Bezug auf die korrekte Auswertung einer elektrischen Widerstandsmessung zur Bestimmung der elektrischen Leitfähigkeit oder eines elektrischen Kontaktwiderstandes, ungestört durch die Unschärfen aufgrund der räumlichen Ausdehnung der Sonde und unerkannter geometrischer Unregelmäßigkeiten der Probe oder ihrer Befestigung in der Probenhalterung. In einer ideal eindimensionalen Anordnung werden die für die Messung physikalisch maßgeblichen Verhältnisse der Potentialdifferenzen durch die geometrischen Längenverhältnisse widergegeben; bei anderer Geometrie ist dies jedoch nicht der Fall. Die Begriffe der effektiven Sondenposition und des effektiven Sondenabstandes sind hier jedoch nicht primär im geometrischen Sinne gemeint, sondern im Sinne ihrer relativen Lage (also ihres Potentialwertes) im Potentialfeld der Probe. Sie sind damit auch bei komplizierter Geometrie skalare Größen und praktischerweise als dimensionslose Größen anzugeben, die den Relativanteil einer Teilspannung in Bezug auf die über der Probe abfallenden Gesamtspannung in der konkreten Einbausituation ausdrückt, also das potentiometrische Teilerverhältnis als reelle Zahl zwischen 0 und 1 beziehungsweise 0 und 100%.

Überraschenderweise hat sich gezeigt, dass eine physikalisch präzise Bestimmung der effektiven Sondenposition und entsprechend eine hochgenaue Messung der wirksamen Probenlänge (das heißt des korrekten potentiometrische Teilerverhältnisses) und damit der elektrischen Leitfähigkeit des Kontaktwiderstandes und so weiter unter Ausnutzung der Analogie der Gestalt des elektrischen Potentialfeldes und des Temperaturfeldes in einem homogenen Medium sowie insbesondere unter Ausnutzung der thermoelektrischen Eigenschaften der Probe möglich ist.

In einer ersten Ausführungsform wird die der vorliegenden Erfindung zu Grunde liegende Aufgabe daher gelöst durch ein Verfahren nach Anspruch 1.

Der Seebeck-Koeffizient kann grundsätzlich positive und negative Werte annehmen. In der vorliegenden Anmeldung sind daher grundsätzlich die betragsmäßigen Werte genannt.

Weist die Probe eine prismatische Geometrie auf, wie es anspruchsgemäß auch der Fall ist, das heißt bei Gültigkeit eines eindimensionalen Modells, entspricht das Verhältnis *V_{P}*/*V₁* dem Längenverhältniss *I_{P}*/*I* und dem effektiven Abstand der elektrischen Potentialsonden auf der Probe. Bevorzugt weist daher die Probe die Gestalt eines geraden Prismas auf. Das beanspruchte Verfahren umfasst Schritt h) Bildung des Verhältnisses *V_{P}*/*V₁* und daraus des Längenverhältnisses *I_{P}*/*I*, welches dem effektiven Abstand der elektrischen Potentialsonden auf der Probe entspricht.

Die effektive Sondenposition im Sinne der vorliegenden Erfindung ist im eindimensionalen Fall die Ortskoordinate, bei der im durch die Messung ungestörten Potentialfeld der mit der Sonde gemessene Potentialwert real vorliegt; bei komplizierten Geometrien entspricht der effektiven Sondenposition eine meist gekrümmte Äquipotentialfläche.

Der erste Block (2a) und der zweite Block (2b) bestehen im Wesentlichen aus demselben Material. Beide Blöcke können ein Metall umfassen, insbesondere daraus bestehen, und/oder eine metallische Beschichtung aufweisen. Das Metall beziehungsweise die metallische Beschichtung müssen dabei einen geringen Seebeck-Koeffizienten aufweisen. Geeignete und bevorzugte Materialien sind beispielsweise Cu, Ag, Au, Ni, Al, Sn, Zn, Pb oder Mischungen aus diesen. Das Metall/die metallische Beschichtung kann auch thermoelektrische Eigenschaften aufweisen. In dieser Ausführungsform müssen die Potentialsonden, die in den Schritten c) und d) auf den ersten und zweiten Block (2a, 2b) und Probe (1) aufgebracht werden, im Wesentlichen dasselbe Material aufweisen. Geeignete Materialien sind beispielsweise Bi, Sb, aber auch spezielle Thermoelement-Legierungen wie Konstantan, Chromel, Platin-Rhodium.

Die Potentialsonden, die in den Schritten c) und d) auf den ersten und zweiten Block (2a, 2b) und Probe (1) aufgebracht werden, bestehen im Wesentlichen jeweils aus demselben Material. Bei den Potentialsonden handelt es sich um metallische Sonden.

Der Abstand zwischen den Potentialsonden auf der Probe (1) beträgt *Iₚ*. Gemeint ist hierbei der Abstand in Richtung des Blockabstandes, also der Abstand zwischen den Sonden in Richtung des Abstandes zwischen den Blöcken (2a, 2b).

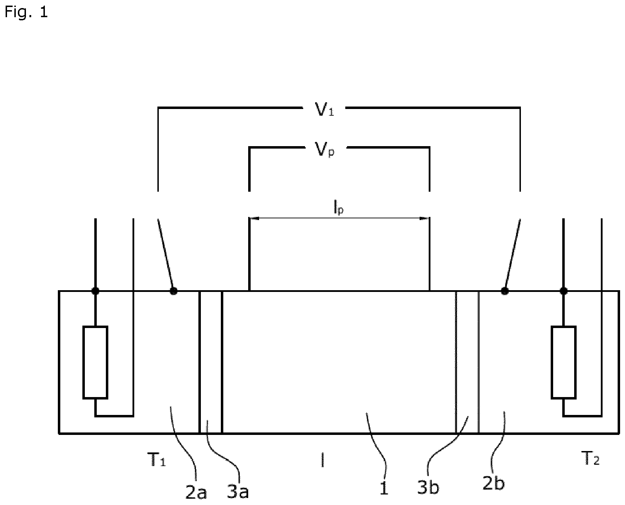

Der für das erfindungsgemäße Verfahren notwendige Aufbau, der sich aus den Schritten a, b, und c ergibt, ist in Fig. 1 schematisch dargestellt. Zur einfachen Darstellbarkeit ist eine gleichmäßige prismatische Geometrie der Probe gezeigt. Demnach ist ein erster Block (2a) über ein Kontaktmaterial (3a) mit einer ersten Kontaktfläche der Probe (1) in Kontakt. Auf einer zweiten Kontaktfläche, die der ersten Kontaktfläche gegenüberliegt und von dieser räumlich getrennt ist, erfolgt dann über ein zweites Kontaktmaterial (3b) der Kontakt mit einem zweiten Block (2b). Dabei besteht ein unmittelbarer flächiger Kontakt zwischen Block (2a, 2b), Kontaktmaterial (3a, 3b) und Probe (1). Dieser ist so beschaffen, dass eine makroskopische Homogenität der Kontaktierung zwischen Block und Probe durch das Kontaktmaterial in der Weise besteht, dass das Verhältnis zwischen spezifischem (flächenbezogenen) elektrischen Kontaktwiderstand und dem spezifischen (flächenbezogenen) thermischen Kontaktwiderstand an allen Stellen der Kontaktierung etwa gleich ist. Dabei ist eine unregelmäßige Gestalt der Kontaktierung, welche sich beispielsweise aus einer unregelmäßigen Form der Probe ergibt, nicht relevant. Auch gegebenenfalls lokale Delaminationen oder Poren / Hohlräume im Bereich der Kontakte stören das erfindungsgemäße Verfahren nicht, solange die Kontakte elektrisch zusammenhängend sind.

Erste Kontakt (3a) und erstes Kontaktmaterial (3a) werden in der vorliegenden Anmeldung synonym verwendet. Während "Kontakt" einen Schwerpunkt auf die physikalischen Eigenschaften legt (Herstellung des Kontaktes zwischen Block und Probe), liegt der Schwerpunkt bei "Kontaktmaterial" auf dem Material, aus dem sich diese Eigenschaften ergeben. Zu verstehen ist hierunter dasselbe. Gleiches gilt auch für zweiten Kontakt (3b) und zweites Kontaktmaterial (3b). Sind erstes und zweites Kontaktmaterial beziehungsweise erster und zweiter Kontakt von einer Beschreibung umfasst, wird nur von "Kontakten" oder "Kontaktmaterialien" gesprochen. Ebenso umfasst der Begriff "Blöcke" immer sowohl den ersten Block (2a) als auch den zweiten Block (2b), soweit nicht explizit anders dargestellt.

Um die notwendigen Messungen durchzuführen, werden jeweils auf dem ersten (2a) und dem zweiten Block (2b) sowie auf der Probe (1) elektrische Potentialsonden aus im Wesentlichen demselben Material aufgebracht. Durch diese Sonden kann die Thermospannung zwischen dem ersten (2a) und dem zweiten Block (2b) sowie innerhalb der Probe (1) bestimmt werden. Hierfür befindet sich auf dem ersten Block wenigstens eine Sonde, sowie auf dem zweiten Block wenigstens eine Sonde. Über diese wird dann die Thermospannung *V₁* in Schritt f) des erfindungsgemäßen Verfahrens bestimmt.

Auf der Probe (1) selbst werden wenigsten zwei Potentialsonden aufgebracht, durch welche ebenfalls die Messung einer Thermospannung *V_{P}* möglich ist. Dabei erfolgt die Aufbringung der Sonden auf die Probe derart, dass während der Messung kein elektrischer Strom oder Wärme zu oder aus der Probe über die Sonden zu- oder abfließen kann. Würde über die Sonden Wärme oder elektrischer Strom zu- oder abfließen, würde dies einen nicht unerheblichen Einfluss auf das Ergebnis der Messung nehmen. Daher ist für das Verfahren wesentlich, dass genau dies verhindert wird. Die Probe (1) umfasst ein thermoelektrisches Material. Würde nun elektrischer Strom durch die Sonden in die Probe zufließen, so würde der Strom entlang der Sonden einen elektrischen Spannungsabfall hervorrufen, der die gemessene Thermospannung verfälscht. Außerdem würde sich aufgrund dieses Stromflusses eine Temperaturdifferenz in der thermoelektrischen Probe einstellen (Peltier-Effekt). Diese würde die in Schritt e) des erfindungsgemäßen Verfahrens eingestellte Temperaturdifferenz beeinflussen, so dass keine Bestimmung der effektiven Positionen mehr möglich wäre. Gleiches gilt, wenn Wärme in die Probe durch die Sonden gelangt.

Nach dem Anschluss der Sonden auf der Probe beziehungsweise den Blöcken wird eine Temperaturdifferenz *ΔT* zwischen dem ersten Block und dem zweiten Block eingestellt. Hierfür wird der erste Block auf eine Temperatur *T1* und der zweite Block auf eine Temperatur *T2* gebracht, wobei *T1* und *T2* voneinander verschieden sind. Durch das Kontaktmaterial gelangt Wärme aus dem ersten Block in die Probe. Da die Temperatur auf der gegenüberliegenden Seite der Probe (1) von dieser ersten Temperatur verschieden ist, stellt sich ein Temperaturgradient im Inneren der Probe ein. Aufgrund der thermoelektrischen Eigenschaften der Probe entsteht ein elektrisches Feld im Inneren derselben. Das zugehörige elektrische Potential ist bei kleinen Temperaturdifferenzen proportional zum Temperaturfeld in der Probe. Die Temperaturdifferenz über der Probe sollte deshalb einen Wert von ca. 10 K nicht übersteigen.

Zwischen den Sonden, die sich auf dem ersten bzw. dem zweiten Block befinden, kann nun eine Thermospannung *V₁* bestimmt werden. Ebenfalls kann, möglichst gleichzeitig, jedoch unbedingt unter denselben Temperaturverhältnissen, eine Thermospannung *V_{P}* mit den Sonden, die auf der Probe aufgebracht sind, bestimmt werden. Die Thermospannung *V₁* schließt dabei die gesamte Temperaturdifferenz über der Probe zwischen den beiden Kontaktstellen sowie auch die Eigenschaften des Kontaktmaterials sowie des Materials des ersten und zweiten Blockes mit ein, die jedoch entsprechend der gewählten Materialien der Anordnung nur einen vernachlässigbaren Beitrag zur Thermospannung leisten. Die Thermospannung *V_{P}* ist nur von der Eigenschaft der Probe und der Temperaturdifferenz zwischen den effektiven Sondenpositionen abhängig.

Aus beiden Messwerten kann das gesuchte Verhältnis der Thermospannung *V_{P}* /*V₁* bestimmt werden. Bei prismatischer Geometrie und bekannter Länge der Probe *I*, welche dem Abstand zwischen den Kontaktflächen entspricht, ergibt sich hieraus dann das Längenverhältnis *I_{P}*/*I*, welches dem effektiven Abstand der elektrischen Potentialsonden auf der Probe entspricht.

Das erfindungsgemäße Verfahren beruht dabei auf dem Seebeck-Effekt. Durch den Seebeck-Effekt können Temperaturdifferenzen im thermoelektrischen Medium über damit verbundene thermoelektrische Spannungen (Thermospannungen aufgrund des Seebeck-Effektes) gemessen werden.

Ein Messstrom, der über definierte Stromeintrittspunkte oder -flächen durch eine beliebige leitfähige homogene Probe geleitet wird, erzeugt darin ein elektrisches Potentialfeld. Wenn alternativ zur Stromeinspeisung über diese Eintrittspunkte eine Temperaturdifferenz, insbesondere stromlos über der Probe angelegt wird, bildet sich ein isometrisches Temperaturfeld, das heißt ein Feld mit gleicher Gestalt und Anordnung der Isothermen im Vergleich zur Gestalt und Anordnung der Äquipotentialflächen bei Stromfluss unter Isothermie aus. Voraussetzung für diese Isometrie ist neben der Homogenität der Probe auch die makroskopische Homogenität der Kontaktierung, das heißt der spezifische elektrische Kontaktwiderstand und die Wärmeübergangszahl sollten keinen starken lokalen Schwankungen unterliegen und bevorzugt konstant sind. Eine unregelmäßige Gestalt der Kontaktierung - auch lokale Delamination - stört das Prinzip, das der Erfindung zu Grunde liegt, jedoch nicht.

Über die Größenverhältnisse der an verschiedenen Punkten eines homogenen Mediums anliegenden Thermospannungen kann beruhend auf der Analogie zwischen Temperatur- und Potentialfeld auf die Gestalt eines isothermen elektrischen Feldes rückgeschlossen werden; insbesondere sind die effektiven Sondenpositionen, also der effektive Sondenabstand, in beiden Fällen praktisch identisch.

Aus kontinuumstheoretischer Sicht gilt das nicht grundsätzlich. Wenn die Verhältnisse zwischen elektrischer Sonden- und Probenleitfähigkeit einerseits und thermischer Sonden- und Probenleitfähigkeit andererseits sich stark unterscheiden, kann es zu kleinen Abweichungen kommen, die jedoch weit unter dem Einfluss der Sondenausdehnung (Dicke der Sondendrähte oder - nadeln) liegen. Dies ist jedoch für das erfinderische Verfahren praktisch nicht relevant und kann daher vernachlässigt werden. Für die Gültigkeit der dargestellten Analogie muss sichergestellt sein, dass über die Sonden keine elektrischen oder Wärmeströme zur oder aus der Probe fließen, was beispielsweise durch thermische Isolierung oder Ankerung der Messsonden erreicht werden kann.

Für eine präzise Messung der Leitfähigkeit ist - bei bekannter Geometrie der Probe - das korrekte potentiometrische Teilverhältnis des von den Sonden eingeschlossenen Probenabschnittes maßgeblich. Dieses ist durch die effektiven Potentialwerte an den Sonden bei Anlegen einer Einheitsspannung bestimmt. Unter idealen Verhältnissen könnte theoretisch ihre exakte Positionsangabe auch auf diese Weise ermittelt werden. Das Anlegen einer definierten und bekannten Spannung über einer leitfähigen Probe (1) ist jedoch wegen des immer auftretenden Kontaktwiderstandes praktisch nicht möglich; der Stromfluss führt zu einem Spannungsabfall am Kontaktwiderstand, um den die sich tatsächlich in der Probe ausbildende Gesamtspannung gegenüber der von außen angelegten Spannung mindert. Eine rein elektrische Bestimmung der effektiven Sondenpositionen aus dem Potentiometerverhältnis der Block- und Probensondenpaare ist also bei Stromfluss durch die Probe grundsätzlich nicht möglich; erst die Messung der stromlos erzeugten Thermospannungen ermöglicht dies. Bei hochleitenden Proben - dies ist typisch für thermoelektrische Materialien - kann der elektrische Kontaktwiderstand durchaus die Größenordnung des Probenwiderstandes erreichen.

Das Potentialfeld der Thermospannung (elektrische Spannung verbunden mit einer Temperaturdifferenz hervorgerufen durch den Seebeck-Effekt) bildet sich in der Probe unabhängig vom elektrischen Kontaktwiderstand aus, da es elektrisch stromlos, allein durch Aufprägen der Temperaturdifferenz, generiert wird. Über Kontakt- und Blockmaterialien, die einen verschwindenden Seebeck-Koeffizienten zeigen, kann die Gesamt-Thermospannung über der Probe zwischen den Kontaktflächen, das heißt den Stromeintrittsorten der Leitfähigkeitsmessung störungsfrei gemessen werden; das Potentiometerverhältnis der Thermospannung liefert damit die exakten effektiven Sondenpositionen im Temperaturfeld.

Der Temperaturabfall über den stets vorhandenen thermischen Kontaktwiderstand am Stromeintrittsort verursacht keine Verfälschung, solange die damit verbundene Thermospannung - wegen des sehr geringen Seebeck-Koeffizienten des Kontaktes - vernachlässigt werden kann. Bei metallischer Kontaktierung ist dies sehr gut erfüllt; bei Oxidbelägen an Druckkontakten können sich dagegen erhebliche Störspannungen ergeben. Man kann also durch Ausnutzung der thermoelektrischen Eigenschaften einer Probe, deren elektrische Eigenschaften mit der weit verbreiteten 4-Punkt-Methode gemessen werden sollen, das korrekte potentiometrische Teilerverhältnis, das heißt die effektiven Sondenpositionen (für prismatische/eindimensionale Anordnungen: den effektiven Sondenabstand) aus den Spannungsverhältnissen an vier Punkten (jeweils eine Sonde außerhalb der Probe an den Stromeintritts- / -austrittspunkten sowie zwei Sonden in ausreichendem Potentialabstand voneinander auf der Oberfläche der Probe zwischen den Eintrittspunkten) bestimmen, wobei sich die Anordnung dabei im stromlosen Zustand in einer Temperaturdifferenz befindet.

Mit denselben Sonden kann zusätzlich bei angelegter Spannung unter isothermen Bedingungen entsprechend gemessen werden. Es ergeben sich geänderte Potentiometerverhältnisse gegenüber dem vorherigen Fall, da nun der elektrische Kontaktwiderstand mit enthalten ist. Aus dem Unterschied beider Messungen kann der elektrische Kontaktwiderstand separiert werden. Gleichzeitig erhält man die elektrische Leitfähigkeit der Probe, frei von Verfälschungen durch den Kontaktwiderstand oder eine Unsicherheit der Sondenposition. Neben dem Ausschluss als Störquelle bei der Messung der elektrischen Leitfähigkeit kann das Prinzip gezielt für die Messung des Kontaktwiderstandes, zum Beispiel im Rahmen von Kontaktierungsentwicklungen, verwendet werden.

Führt man den relativen elektrischen Kontaktwiderstand *r* = *R*_{K}/*R* als das Verhältnis des elektrischen Kontaktwiderstandes zum Probenwiderstand ein und setzt man einen vernachlässigbaren Ohmschen Spannungsabfall über die Blöcke und Stromzuführung voraus (dies ist gegeben, wenn man den Messstrom nicht über die Potentialsonde am Block selbst sondern über eine separate Stromleitung zum Block führt), so stehen die Potentiometerverhältnisse der Thermospannungsmessung (*V*_{P}/*V*₁)_{Δ*T*} und der elektrischen Messung (*V*_{P}/*V*₁)*_{I}* zueinander in der Relation (1+*r*)(*V*_{P}/*V*₁)_{Δ*T*} =(*V_{P}*/*V*₁)*_{I}*, das heißt in der elektrischem Messung erhält man ein um den relativen Kontaktwiderstand vergrößertes Potentiometerverhältnis verglichen mit der stromlosen Thermospannungsmessung. Misst man beide Verhältnisse, kann man den relativen Kontaktwiderstand berechnen.

Bevorzugt umfasst die Probe nicht nur ein thermoelektrisches Material, sondern besteht im Wesentlichen aus diesem. Die Reinheit der Probe ist dabei für das erfindungsgemäße Verfahren nicht relevant. Prinzipiell sollte die Probe möglichst homogen sein, so dass das das Verhältnis von elektrischer zu Wärmeleitfähigkeit lokal nicht großen Schwankungen unterliegt. Wenn die elektrische Leitfähigkeit nicht zu niedrig ist, ist dies aber grundsätzlich schon durch das Wiedemann-Franz-Gesetz sichergestellt. Zudem stellt sich dieses Problem auch bei im Stand der Technik bekannten Messverfahren.

Der erste Block (2a) und der zweite Block (2b) bestehen im Wesentlichen aus dem gleichen Material beziehungsweise weisen die gleiche Beschichtung auf. Kontakte (3a, 3b), Blöcke (2a, 2b) und Sonden weisen bevorzugt denselben Seebeck-Koeffizienten auf. Während die Blöcke (2a, 2b) und die Sonden entsprechend gewählt werden, ist der Seebeck-Koeffizient der Kontakt (3a, 3b) häufig unbekannt. Mit metallischen Kontakten (3a, 3b) ist jedoch ein ausreichend geringer Seebeck-Koeffizient von betragsmäßig üblicherweise weniger als 5 µV/K zu erwarten und zu realisieren.

Als Material für Blöcke (2a, 2b), Kontakte (3a, 3b) und Sonden wird ein solches Material gewählt, welches einen Seebeck-Koeffizienten betragsmäßig von 10 µV/K oder weniger aufweist. Bevorzugt liegt der Seebeck-Koeffizient S im Bereich von betragsmäßig 0 µV/K bis 10 µV/K, insbesondere von 0 µV/K bis 8 µV/K oder von 0 µV/K bis 5 µV/K.

Blöcke (2a, 2b), Kontakte (3a, 3b) und Sonden weisen bevorzugt eine elektrische Leitfähigkeit von wenigstens 10⁴ S/cm, vorzugsweise von 10⁴ - 10⁹ S/cm, insbesondere von 10⁵ bis 10⁸ S/cm oder von 10⁵ bis 10⁷ S/cm auf.

Insbesondere bevorzugt besitzen Blöcke (2a, 2b), Kontakte (3a, 3b) und Sonden eine Wärmeleitfähigkeit von mindestens 10 W/(m · K), insbesondere von mindestens 100 W/(m · K). Bei einem geringen Seebeck-Koeffizienten und Gleichheit zwischen Blöcken (2a, 2b), Kontakten (3a, 3b) und Sonden hinsichtlich des Seebeck-Koeffizienten, ist die Wärmeleitfähigkeit nicht relevant.

Metallische Materialien im Sinne der vorliegenden Erfindung sind solche Elemente, die sich im Periodensystem der Elemente links und unterhalb einer Trennungslinie zwischen Bor bis Astat befinden. Dabei sind auch Legierungen und innermetallische Phasen, welche insbesondere die vorgenannten Eigenschaften, nämlich geringen Seebeck-Koeffizient, elektrische Leitfähigkeit und Wärmeleitfähigkeit, aufweisen, hiervon umfasst. Charakteristisch für metallische Stoffeigenschaften sind eine hohe elektrische Leitfähigkeit, sowie hohe Wärmeleitfähigkeit und ein geringer Seebeck-Koeffizient.

Besonders geeignete und bevorzugte Materialien für Blöcke (2a, 2b) und Sonden sind Cu, Ag, Au, Ni, Al, Sn, Zn, Pb oder Mischungen aus diesen. Geeignete Materialien sind beispielsweise Bi, Sb, aber auch spezielle Thermoelement-Legierungen wie Konstantan, Chromel, Platin-Rhodium. Ist in der vorliegenden Anmeldung von einem Material für die Blöcke (2a, 2b) die Rede, so können die Blöcke aus diesem Material im Wesentlichen bestehen oder eine Beschichtung aus diesem Material aufweisen, welche dann die Eigenschaften der Blöcke (2a, 2b) für das erfindungsgemäße Verfahren definiert.

Das Kontaktmaterial (3a, 3b) ist, ebenso wie das Material des ersten und/oder zweiten Blocks, ein metallisches Material, welches die zuvor genannten Eigenschaften hinsichtlich Seebeck-Koeffizient, elektrischer Leitfähigkeit und Wärmeleitfähigkeit aufweist. Besonders bevorzugt ist das Kontaktmaterial bei Raumtemperatur und Normaldruck flüssig. Dies ermöglicht eine einfache Handhabung bei der Messung. Die Probe kann zwischen dem Block (2a, 2b) einfach eingeführt und herausgenommen werden, ohne dass Probe (1) und/oder Block (2a, 2b) einer besonderen mechanischen Beanspruchung unterworfen werden. Somit ist die mechanische Belastung der Probe gering, was insbesondere bei dünnen Proben (1) relevant ist.

Die Probe (1) umfasst ein thermoelektrisches Material und besteht insbesondere daraus. Der Seebeck-Koeffizient der Probe unterscheidet sich von den dem der Sonden, um eine Messung zu ermöglichen. Bevorzugt ist der Seebeck-Koeffizient der Probe betragsmäßig daher größer 10 µV/K, bevorzugt liegt er betragsmäßig im Bereich von 25 µV/K bis 500 µV/K, insbesondere im Bereich von 50 µV/K bis 300 µV/K oder von 70 µV/K bis 250 µV/K, besonders von 100 µV/K bis 200 µV/K.

Die elektrische Leitfähigkeit der Probe (1) liegt vorzugsweise bei 10⁴ S/cm oder weniger, insbesondere 10¹ bis 10⁴ S/cm, bevorzugt von 10² bis 10³ S/cm. Die Wärmeleitfähigkeit der Probe beträgt vorzugsweise 20 W/(m·K) oder weniger insbesondere im Bereich von 0 bis 15 W/(m·K), vorzugsweise von 0,2 bis 10 W/(m·K), besonders bevorzugt von 0,5 bis 5 W/(m·K). Bevorzugt ist das thermoelektrische Material der Probe (1) ausgewählt aus Skutteruditen, Clathraten, Halb-Heusler-Verbindungen, Zintl-Verbindungen, quaternäre Chalcogeniden, Telluriden, insbesondere Bismuttellurid, PbTe, SnTe und ihre Mischkristalle sowie Nanomaterialien auf ihrer Basis, beispielsweise LAST (Bleisilberantimontellurid), TAST (Zinnantimonsilbertellurid), BTST (Wismuthzinnsilbertellurid), usw.; Siliziden, insbesondere der Elemente Magnesium, Mangan, Eisen, Chrom und andere; Übergangsmetallen und ihrer Mischkristalle, insbesondere darunter Stannide und Germanide; Sulfiden, insbesondere des Titans, Zinns usw. und Antimoniden, insbesondere Zn₄Sb₄ und ZnSb, MgAgSb.

Die Einstellung der Temperaturdifferenz in Schritt e) des erfindungsgemäßen Verfahrens erfolgt vorzugsweise stromlos, das heißt ohne dass ein elektrischer Strom durch die Probe fließt. Die Aufheizung der Blöcke kann durch eine externe Erwärmung oder durch eine im Inneren der Blöcke angebrachte Heizquelle, insbesondere einen elektrischen Miniaturheizer (eine Heizwicklung, einen Widerstand, ...) erfolgen.

In Fig. 1 ist eine Anordnung zur Bestimmung der effektiven Sondenposition mittels des erfindungsgemäßen Verfahrens schematisch dargestellt.

Die Anordnung entspricht im Prinzip einer typischen 4-Sonden-Anordnung zur Messung der elektrischen Leitfähigkeit in prismatischer Geometrie, wobei die elektrischen Sondenleitungen an der Probe weitgehend isotherm an die Kontaktstellen geführt werden sollen. Eine Probe mit dem Seebeck-Koeffizienten S, mit dem elektrischen Widerstand R und dem Wärmeleitwert K wird durch metallische Kontaktierung, zum Beispiel durch Flüssigmetallkontakte, Löten, Hartlöten, Diffusionsschweißen oder ähnliches; Kontaktschichten (3a, 3b) vergrößert dargestellt, zwischen zwei Metallblöcken (2a, 2b) befestigt. Metalle haben eine um mehrere Größenordnungen höhere elektrische Leitfähigkeit als typische thermoelektrische Materialien; die Blöcke (2a, 2b) tragen deshalb nicht signifikant zum Potentialabfall bei. Zwischen den Blöcken (2a, 2b) kann über integrierte Heizer oder durch externe Erwärmung eine Temperaturdifferenz eingestellt werden. Die Zuführung des Messstromes kann in einer Ausführungsform über metallische Sonden mit der Bezeichnung *V₁* erfolgen, zwischen denen sich die Spannung *V₁* ausbildet. Die Messspannung *Vₚ* zur Ermittlung der Leitfähigkeit der Probe wird zwischen metallischen Potentialsonden, bestehend aus demselben Material wie die Sonden *V₁,* gemessen, die im Abstand *I*ₚ voneinander auf der Probe angebracht sind. Möchte man auch den elektrischen Kontaktwiderstand separieren, was vorliegend bevorzugt ist, erfolgt die Zuführung des Messstroms über zusätzliche Leitungen. In diesem Fall können alle physikalischen Größen der Probe (1) bestimmt werden. Erfolgt die Zufuhr des Messtroms über die Sonden, können nur Sondenabstand und Leitfähigkeit ermittelt werden. Daher ist es bevorzugt eigene Leitungen für die Zufuhr des Stromes vorzusehen.

Dieser Abstand *I*ₚ muss genau bekannt sein, dies ist entscheidend für die Genauigkeit der Leitfähigkeitsmessung. Die visuelle Bestimmung des Abstandes ist aufwendig und prinzipiell unsicher. Eine im isothermen Fall über die Sonden V₁ der Blöcke angelegte Spannung teilt sich im Verhältnis der Anteile des elektrischen Widerstands zwischen den Sonden und jenseits der Sonden. Die physikalisch korrekten Sondenpositionen im Sinne dieses Potentiometerverhältnisses werden durch die Äquipotentialflächen definiert, die durch Sondenpositionen verlaufen. Dabei ist diejenige Äquipotentialfläche zu betrachten, die dem an der Sonde gemessenen Potentialwert entspricht. In dieser Messung, wie sie üblicherweise vorgenommen wird, trägt der Kontaktwiderstand voll zu den entsprechenden Widerstandsanteilen bei und beeinflusst damit das Teilerverhältnis *V*ₚ/*V*₁. Deshalb kann aus diesem Teilerverhältnis nicht auf die geometrische Position der Sonden rückgeschlossen werden.

Wird dagegen im stromlosen Fall, wie im erfindungsgemäßen Verfahren beschrieben, eine Temperaturdifferenz zwischen den Blöcken eingestellt, werden über das Leitungspaar an den Blöcken und über die Sonden Thermospannungen gemessen. Die Thermospannung zwischen den Sonden entspricht der Temperaturdifferenz zwischen den Isothermen, die durch die Sonden verlaufen; die Thermospannung zwischen den Blöcken entspricht der gesamten Thermospannung über der Probe, denn die Beiträge über den Blöcken sowie über den Kontakten sind vernachlässigbar, da deren Seebeck-Koeffizient aufgrund des metallischen Charakters sehr gering ist. Das Teilerverhältnis *V*ₚ/*V*₁ spiegelt in diesem erfindungsgemäßen Fall das Verhältnis der Temperaturdifferenzen innerhalb der thermoelektrischen Probe in Gegenüberstellung der Anteile innerhalb und außerhalb der Kontaktpunkte der Sonden wider. In einer homogenen Probe entspricht dies dem Verhältnis der entsprechenden Wärmewiderstände und, wegen der gleichartigen Geometrie des Potential- und Temperaturfeldes in der Probe, auch dem Verhältnis der entsprechenden elektrischen Widerstände innerhalb der Probe, unbeeinflusst vom Kontaktwiderstand.

In einer prismatischen Geometrie wie in Fig. 1 schematisch gezeichnet ist dies gleich dem Längenverhältnis des Sondenabstandes *I*ₚ zur Gesamtprobenlänge *I*. Damit ist der Sondenabstand physikalisch exakt bekannt. Bei unregelmäßiger Geometrie, jedoch homogener Probe und homogener Kontaktierung ist dem Verhältnis keine geometrische Bedeutung zuzuordnen; es gibt unverändert die exakte Sondenposition im Sinne des elektrischen Potentiometer-Teilerverhältnisses innerhalb der Probe an. Damit ist ein präzises Abtrennen des elektrischen Kontaktwiderstandes auch bei unregelmäßiger Probengestalt möglich.

## Patentansprüche

1. Verfahren zur Bestimmung des effektiven Abstands elektrischer Potentialsonden im Temperaturfeld einer Probe (1) mit einer prismatischen Geometrie, welche ein thermoelektrisches Material umfasst, wobei die Probe (1) zwei räumlich voneinander getrennte Kontaktflächen aufweist und der Abstand zwischen diesen Kontaktflächen der Länge *I* entspricht, umfassend:
a) in Kontakt bringen einer ersten Kontaktfläche der Probe (1) über ein erstes Kontaktmaterial (3a) mit einem ersten Block (2a) und
b) in Kontakt bringen einer zweiten Kontaktfläche der Probe (1) über ein zweites Kontaktmaterial (3b) mit einem zweiten Block (2b),
wobei erster Block (2a) und zweiter Block (2b) ein Metall und/oder eine metallische Beschichtung aufweisen, wobei Metall und/oder metallische Beschichtung einen Seebeck-Koeffizienten von betragsmäßig 10 µV/K oder weniger aufweisen,
c) Aufbringen mindestens jeweils einer elektrischen Potentialsonde auf dem ersten Block (2a) und auf dem zweiten Block (2b), derart, dass sie über den jeweiligen Block (2a, 2b) elektrisch leitend mit dem jeweiligen Kontaktmaterial (3a, 3b) verbunden sind,
d) Aufbringen von wenigstens zwei elektrischen Potentialsonden auf der Probe, wobei der Abstand in Richtung des Blockabstandes zwischen den Sonden *I_{P}* beträgt und *I_{P}* < *I* ist,
wobei die Potentialsonden auf der Probe (1) und die Potentialsonden auf den Blöcken (2a, 2b) im Wesentlichen aus demselben Material bestehen und
die Aufbringung derart erfolgt, dass während der nachfolgenden Messung kein elektrischer Strom oder Wärme zu oder aus der Probe über die Sonden zu- oder abfließen kann,
anschließend
e) Einstellen einer Temperaturdifferenz *ΔT* zwischen dem ersten Block (2a) und dem zweiten Block (2b),
f) Bestimmung der Thermospannung *V₁* zwischen dem ersten Block (2a) und dem zweiten Block (2b) mittels der auf den Blöcken jeweils aufgebrachten Sonden,
g) anschließend oder gleichzeitig mit f) und unter denselben Temperaturbedingungen wie in Schritt f) Bestimmung einer Thermospannung *V_{P}* mittels der auf der Probe aufgebrachten elektrischen Potentialsonden, und
h) Bildung des Verhältnisses *V_{P}*/*V₁* und Bildung des Längenverhältnisses *I_{P}*/*I* aus dem Verhältnis *V_{P}*/*V₁,* wobei das Längenverhältnis *I_{P}*/*I* dem effektiven Abstand der elektrischen Potentialsonden auf der Probe entspricht.

2. Verfahren nach Anspruch 1, **dadurch gekennzeichnet, dass** der erste Block (2a) und der zweite Block (2b) ein Metall und/oder eine metallische Beschichtung aufweisen, insbesondere aus dem Metall bestehen.

3. Verfahren nach Anspruch 1 oder 2, **dadurch gekennzeichnet, dass** erster Block (2a), zweiter Block (2b), erstes Kontaktmaterial (3a), zweites Kontaktmaterial (3b) und die in den Schritten c) und d) aufgebrachten Potentialsonden einen Seebeck-Koeffizienten S von betragsmäßig 0 µV/K bis 10 µV/K, bevorzugt von 0 µV/K bis 5 µV/K aufweisen.

4. Verfahren nach einem der Ansprüche 1 bis 3, **dadurch gekennzeichnet, dass** erster Block (2a), zweiter Block (2b), erstes Kontaktmaterial (3a), zweites Kontaktmaterial (3b) und die in den Schritten c) und d) aufgebrachten Potentialsonden eine elektrische Leitfähigkeit von wenigstens 10⁴ S/cm, vorzugsweise von 10⁴ S/cm bis 10⁹ S/cm, insbesondere von 10⁵ S/cm bis 10⁸ S/cm, aufweisen.

5. Verfahren nach Anspruch 3 oder 4, **dadurch gekennzeichnet, dass** das Kontaktmaterial bei Raumtemperatur und Normaldruck flüssig ist.

6. Verfahren nach einem der Ansprüche 1 bis 5, **dadurch gekennzeichnet, dass** die Probe einen Seebeck-Koeffizienten betragsmäßig von 10 µV/K oder mehr, insbesondere von 25 µV/K bis 500 µV/K, und/oder eine elektrische Leitfähigkeit von 10⁴ S/cm oder weniger, insbesondere von 10¹ bis 10⁴ S/cm, aufweist.

7. Verfahren nach einem der Ansprüche 1 bis 6, **dadurch gekennzeichnet, dass** die Einstellung von *ΔT* in Schritt e) stromlos in Bezug auf einen Stromfluss durch die Probe (1) erfolgt.

8. Verfahren nach einem der Ansprüche 1 bis 7, **dadurch gekennzeichnet, dass** in Schritt d) die Sonden auf der Probe thermisch isoliert oder mit einem thermischen Reservoir verankert werden, wobei die Temperatur der Verankerung im Wesentlichen der Temperatur der Probe an der Aufsetzstelle der Sonde entspricht.

9. Verfahren nach einem der Ansprüche 1 bis 8, **dadurch gekennzeichnet, dass** es unabhängig von der Geometrie der Probe und der Kontakte ist.

## Claims

1. A method for determining the effective distance of electrical potential probes in the temperature field of a sample (1) having a prismatic geometry, comprising a thermoelectric material, wherein said sample (1) has two spatially separated contact surfaces, and the distance between these contact surfaces corresponds to the length I, comprising:
a) contacting a first contact surface of the sample (1) through a first contact material (3a) with a first block (2a), and
b) contacting a second contact surface of the sample (1) through a second contact material (3b) with a second block (2b),
wherein said first block (2a) and said second block (2b) comprise a metal and/or a metallic coating, said metal and/or metallic coating having a Seebeck coefficient whose absolute value is 10 µV/K or less,
c) applying at least one electrical potential probe each to said first block (2a) and said second block (2b) so that these probes have electrically conductive connections through the respective block (2a, 2b) to the respective contact material (3a, 3b),
d) applying at least two electrical potential probes to the sample, wherein the distance in the direction of the block distance between the probes is Iₚ, and Iₚ < I,
wherein the potential probes on the sample (1) and the potential probes on the blocks (2a, 2b) essentially consist of the same material, and
the applying is effected in such a way that no electric current or heat can flow into or from the sample through the probes during the subsequent measurement,
followed by
e) setting a temperature difference ΔT between the first block (2a) and the second block (2b),
f) determining the thermovoltage V₁ between the first block (2a) and the second block (2b) by means of the probes respectively applied to the blocks,
g) subsequently or simultaneously with f) and under the same temperature conditions as in step f), determining a thermovoltage Vₚ by means of the electrical potential probes applied to the sample, and
h) forming the ratio Vₚ/V₁, and forming of the length ratio Iₚ/I from the ratio Vₚ/V₁, wherein the length ratio Iₚ/I corresponds to the effective distance between the electrical potential probes on the sample.

2. The method according to claim 1, **characterized in that** the first block (2a) and the second block (2b) comprise a metal and/or have a metallic coating, especially consist of said metal.

3. The method according to claim 1 or 2, **characterized in that** the first block (2a), the second block (2b), the first contact material (3a), the second contact material (3b) and the potential probes applied in steps c) and d) have a Seebeck coefficient S whose absolute value is from 0 µV/K to 10 µV/K, preferably from 0 µV/K to 5 µV/K.

4. The method according to any of claims 1 to 3, **characterized in that** the first block (2a), the second block (2b), the first contact material (3a), the second contact material (3b) and the potential probes applied in steps c) and d) have an electric conductivity of at least 10⁴ S/cm, preferably from 10⁴ to 10⁹ S/cm, especially from 10⁵ to 10⁸ S/cm.

5. The method according to claim 3 or 4, **characterized in that** the contact material is liquid at room temperature and under a normal pressure.

6. The method according to any of claims 1 to 5, **characterized in that** the absolute value of the Seebeck coefficient of the sample is 10 mV/K or more, especially from 25 mV/K to 500 µV/K, and/or an electric conductivity of 10⁴ S/cm or less, especially from 10¹ to 10⁴ S/cm.

7. The method according to any of claims 1 to 6, **characterized in that** the setting of ΔT in step e) is effected under a currentless condition with respect to a current flow through the sample (1).

8. The method according to any of claims 1 to 7, **characterized in that** the probes in step d) are thermally insulated on the sample or anchored with a thermal reservoir, in which the temperature of the anchoring essentially corresponds to the temperature of the sample at the touchdown site of the probe.

9. The method according to any of claims 1 to 8, **characterized by** being independent of the geometry of the sample and of the contacts.

## Revendications

1. Procédé pour déterminer la distance effective entre des sondes de potentiel électrique dans le champ de température d'un échantillon (1) ayant une géométrie prismatique et comprenant un matériau thermoélectrique, dans lequel ledit échantillon (1) présente deux surfaces de contact séparées dans l'espace, et la distance entre ces surfaces de contact correspond à la longueur I, comprenant les étapes consistant à :
a) mettre une première surface de contact de l'échantillon (1) en contact avec un premier bloc (2a) par l'intermédiaire d'un premier matériau de contact (3a), et
b) mettre une deuxième surface de contact de l'échantillon (1) en contact avec un deuxième bloc (2b) par l'intermédiaire d'un deuxième matériau de contact (3b),
dans lequel le premier bloc (2a) et le deuxième bloc (2b) présentent un métal et/ou un revêtement métallique, dans lequel ledit métal et/ou ledit revêtement métallique présentent un coefficient Seebeck ayant une valeur absolue de 10 µV/K ou moins,
c) appliquer au moins une sonde de potentiel électrique respectivement sur le premier bloc (2a) et sur le deuxième bloc (2b) de telle manière qu'ils soient reliés, de façon conductrice de l'électricité, avec le matériau de contact respectif (3a, 3b) par l'intermédiaire du bloc respectif (2a, 2b),
d) appliquer au moins deux sondes de potentiel électrique sur l'échantillon, où la distance dans la direction de la distance entre les blocs entre les sondes est Iₚ, et Iₚ < I,
dans lequel les sondes de potentiel sur l'échantillon (1) et les sondes de potentiel sur les blocs (2a, 2b) sont sensiblement réalisées dans le même matériau, et
l'application est effectuée de telle manière qu'un courant électrique ou de la chaleur ne peuvent pas entrer l'échantillon ou s'échapper de l'échantillon par l'intermédiaire des sondes pendant la mesure suivante,
et ensuite
e) établir une différence de température ΔT entre le premier bloc (2a) et le deuxième bloc (2b),
f) déterminer la tension thermoélectrique V₁ entre le premier bloc (2a) et le deuxième bloc (2b) au moyen des sondes respectivement appliquées sur les blocs,
g) ensuite ou simultanément avec f) et sous les mêmes conditions de température que dans l'étape f), déterminer une tension thermoélectrique Vₚ au moyen des sondes de potentiel électrique appliquées sur l'échantillon, et
h) former le rapport Vₚ/V₁, et former le rapport des longueurs Iₚ/I à partir du rapport Vₚ/V₁, dans lequel ledit rapport des longueurs Iₚ/I correspond à la distance effective entre les sondes de potentiel électrique sur l'échantillon.

2. Procédé selon la revendication 1, **caractérisé en ce que** ledit premier bloc (2a) et ledit deuxième bloc (2b) comprennent un métal et/ou un revêtement métallique, notamment consistent en le métal.

3. Procédé selon la revendication 1 ou 2, **caractérisé en ce que** ledit premier bloc (2a), ledit deuxième bloc (2b), ledit premier matériau de contact (3a), ledit deuxième matériau de contact (3b) et les sondes de potentiel appliquées dans les étapes c) et d) présentent un coefficient Seebeck S ayant une valeur absolue de 0 µV/K à 10 µV/K, de préférence de 0 µV/K à 5 µV/K.

4. Procédé selon l'une quelconque des revendications 1 à 3, **caractérisé en ce que** ledit premier bloc (2a), ledit deuxième bloc (2b), ledit premier matériau de contact (3a), ledit deuxième matériau de contact (3b) et les sondes de potentiel appliquées dans les étapes c) et d) présentent une conductivité électrique d'au moins 10⁴ S/cm, de préférence de 10⁴ S/cm à 10⁹ S/cm, notamment de 10⁵ S/cm à 10⁸ S/cm.

5. Procédé selon la revendication 3 ou 4, **caractérisé en ce que** ledit matériau de contact est liquide à la température ambiante et sous la pression normale.

6. Procédé selon l'une quelconque des revendications 1 à 5, **caractérisé en ce que** l'échantillon présente un coefficient Seebeck ayant une valeur absolue de 10 µV/K ou plus, notamment de 25 µV/K à 500 µV/K, et/ou une conductivité électrique de 10⁴ S/cm ou moins, notamment de 10¹ à 10⁴ S/cm.

7. Procédé selon l'une quelconque des revendications 1 à 6, **caractérisé en ce que** l'étape consistant à établir ΔT dans l'étape e) est effectuée hors tension par rapport à une circulation du courant à travers l'échantillon (1).

8. Procédé selon l'une quelconque des revendications 1 à 7, **caractérisé en ce que**, dans l'étape d), les sondes sur l'échantillon sont isolées de façon thermique ou ancré avec un réservoir thermique, dans lequel la température de l'ancrage sensiblement correspond à la température de l'échantillon à l'endroit où la sonde repose.

9. Procédé selon l'une quelconque des revendications 1 à 8, **caractérisé en ce qu'**il est indépendant de la géométrie de l'échantillon et des contacts.
